# EUROPEAN PATENT SPECIFICATION

(11) **EP 4 430 995 B1**
(45) Date of publication and mention of the grant of the patent: **06.05.2026**
(21) Application number: 23164596.1
(22) Date of filing: 28.03.2023
(51) Int. Cl.: A47J 37/06

(54) **HAND-CRANKED PIZZA OVEN**
MANIVELLENBETRIEBENER PIZZAOFEN
FOUR A PIZZA A MANIVELLE MANUELLE

(30) Priority: 14.03.2023 CN 202320489965 U
(43) Date of publication of application: 18.09.2024
(73) Proprietor: Haohong Electric Technology (Hubei) Co., Ltd., Huanggang, Hubei 438000 (CN)
(72) Inventor: WANG, Min, Huanggang, 438300 (CN)
(74) Representative: Monteiro Alves, Inês

(56) References cited:
- FR-A1- 2 814 933
- US-A1- 2022 279 799

## Description

### TECHNICAL FIELD

The present disclosure relates to the technical field of cooking equipment, and in particular to a hand-cranked pizza oven.

### BACKGROUND

The pizza is a kind of traditional western food and favorable all over world due to globalization.

With the development of diversity in social life, special cooking equipment for various foods are developing towards the miniaturization and portability, such as pizza ovens. Small shops, fast food restaurants on the street, and individuals all want to make their own pizzas, which will be possible with the improvement of pizza ovens. Thus, pizzas are no longer only made by pizzerias with fixed ovens.

In the present market, especially in the European and American markets, the baking tray and heating assembly are integrated in the oven body of the present pizza baking equipment, which requires the external gas to bake the pizza, the volume of the pizza baking equipment is reduced to occupy a smaller space for shop operators to bake pizza, and to also allow individuals to have a portable pizza baking machine at home or on a picnic. Among these pizza baking equipment, there is a type of pizza oven which controls the rotation of the baking tray by a handle to heat the pizza evenly. Although this kind of pizza oven is smaller than traditional pizza ovens, its' handle transmission mechanism is easy to fail during operation. A pizza oven according to the prior art is disclosed in US2022/279799.

### SUMMARY

The main purpose of this present disclosure is to provide a hand-cranked pizza oven with low failure rate and easy maintenance.

To achieve the above object, the present disclosure provides a hand-cranked pizza oven, including: an oven body, a baking tray, a burner assembly, and a hand-cranked driving structure.
the oven body is provided with a cooking chamber.

The baking tray is rotatably provided in the cooking chamber along an axis extending in an up-down direction;
the burner assembly includes a burning portion extendable into the cooking chamber for roasting ingredients on the baking tray;
the hand-cranked driving structure includes a rocker rotatable around an axis extending in a horizontal direction, a driving portion rotatably provided along the axis extending in the up-down direction, and a transmission structure provided between the rocker and the driving portion, at least part of the driving portion is configured to be extendable into the cooking chamber to connect to and drive the baking tray.

In an embodiment, the rocker is provided with a rocker shaft extending in the horizontal direction;
the transmission structure includes a second bevel gear provided on the rocker shaft and a first bevel gear meshed with the second bevel gear;
a connection shaft is provided at a middle position of the first bevel gear; and
the driving portion includes the connection shaft.

In an embodiment, the hand-cranked pizza oven further includes a connection frame provided in the cooking chamber, a connection hole is provided in a middle of the connection frame, and the connection frame includes a plurality of clamping arms extending towards a periphery of the connection frame;
a part of the connection shaft extending into the cooking chamber is provided in the connection hole and is connected to the connection frame for stopping rotation; and
the baking tray is provided in the plurality of the clamping arms.

In an embodiment, the hand-cranked pizza oven further includes a plane bearing provided in the cooking chamber, the plane bearing includes an upper connector and a lower connector distributed in the up-down direction respectively, and a plurality of rolling elements provided between the upper connector and the lower connector;
the upper connector is rotatably provided relative to the lower connector along the axis extending in the up-down direction; and
the upper connector is upwardly connected to the connection frame, and the lower connector is downwardly connected to a bottom wall of the cooking chamber.

In an embodiment, a protective shell is detachably provided at a lower end of the oven body; and
the first bevel gear and the second bevel gear are provided in the protective shell.

In an embodiment, the oven body includes a base and an oven shell covering the base, and the cooking chamber is defined between the base and the oven shell.

In an embodiment, an opening is provided at an end of the cooking chamber away from the burning portion, and the baking tray is provided adjacent to the opening.

In an embodiment, the burning portion includes a burning pipe provided in the cooking chamber; and
a reflecting shell is provided in the cooking chamber, the reflecting shell is covered on the baking tray and the burning pipe for reflection, an upward deflector is provided between the burning pipe and the baking tray to guide a heat flow of the burning pipe upward to a top of the reflecting shell; and/or,
a downward deflector is provided on a top wall of the reflecting shell to guide the heat flow downward to cover on the baking tray.

In an embodiment, the burning portion includes a burning pipe, an accommodation chamber is defined in the oven body, the accommodation chamber is adjacent to the cooking chamber;
the baking tray, the burning pipe, and the accommodation chamber are provided sequentially at intervals;
a ventilation hole is formed on a sidewall of the oven body of the accommodation chamber; and
the burner assembly further includes an air supply pipe and a regulation valve provided on the air supply pipe for adjustment of an amount of air supplied by the burning pipe, the air supply pipe is provided in the accommodation chamber, and the regulation valve is extended out from the top of the oven body corresponding to the accommodation chamber.

In an embodiment, the burning portion includes a burning pipe provided in the cooking chamber; and
a bottom wall of the cooking chamber is provided with an air inlet corresponding to the burning pipe.

According to the technical solution of the present disclosure, the driving portion is extended into the cooking chamber and is connected to the baking tray for driving, and plays a role as the rotating shaft of the baking tray, supporting the baking tray, and driving the baking tray to rotate. Compared with a design in the prior art where the rotating shaft of the baking tray and the driving device are provided at different positions at intervals, the hand-cranked pizza oven provided in the present disclosure integrates the rotating shaft of the baking tray and the driving device together, which reduces the overall volume of the hand-cranked pizza oven, the number of elements supporting the baking tray, and the number and volume of elements for transmitting torque, and the reduction in the number of components reduces the number of the transmission relationships, that means the connection points that are possible to fail are reduced, to reduce the failure rate of the hand-cranked pizza oven.

### BRIEF DESCRIPTION OF THE DRAWINGS

In order to illustrate the technical solutions in the embodiments of the present disclosure or in the related art more clearly, the following briefly introduces the accompanying drawings required for the description of the embodiments or the prior art. Obviously, the drawings in the following description are only part of embodiments of the present disclosure. Other drawings can also be obtained by those skilled in the art according to the structures shown in these drawings without any creative effort.
FIG. 1 is a three-dimensional structural schematic view of a hand-cranked pizza oven according to an embodiment of the present disclosure.
FIG. 2 is an explosive structural schematic view of the hand-cranked pizza oven in FIG. 1.
FIG. 3 is a three-dimensional structural schematic view of a hand-cranked driving structure of the hand-cranked pizza oven in FIG. 1 observed from another direction.
FIG. 4 is a three-dimensional structural schematic view of the hand-cranked driving structure of the hand-cranked pizza oven in FIG. 1.
FIG. 5 is a three-dimensional structural schematic view of a driving portion and a transmission structure of the hand-cranked pizza oven in FIG. 1.
FIG. 6 is a three-dimensional structural schematic view of a base and a plane bearing of the hand-cranked pizza oven in FIG. 1.
FIG. 7 is a three-dimensional structural schematic view of an oven shell of the hand-cranked pizza oven in FIG. 1.
FIG. 8 is a three-dimensional structural schematic view of the plane bearing of the hand-cranked pizza oven in FIG. 1.
FIG. 9 is a three-dimensional structural schematic view of a baking tray and a connection frame of the hand-cranked pizza oven in FIG. 1.
FIG. 10 is a three-dimensional structural schematic view of the baking tray and the connection frame of the hand-cranked pizza oven in FIG. 1 observed from another direction.
FIG. 11 is a three-dimensional structural schematic view of a burner assembly of the hand-cranked pizza oven in FIG. 1.

The description of reference signs:

| Reference sign | Name | Reference sign | Name |
|---|---|---|---|
| 100 | hand-cranked pizza oven | 41 | rocker |
| 1 | oven body | 42 | driving portion |
| 11 | base | 421 | connection shaft |
| 111 | air inlet | 43 | transmission structure |
| 12 | oven shell | 431 | first bevel gear |
| 121 | reflecting shell | 432 | second bevel gear |
| 122 | ventilation hole | 44 | protective shell |
| 2 | baking tray | 5 | connection frame |
| 3 | burner assembly | 51 | clamping arm |
| 31 | burning portion | 6 | plane bearing |
| 32 | air supply pipe | 61 | upper connector |
| 33 | regulation valve | 62 | rolling element |
| 4 | hand-cranked driving structure | 63 | lower connector |

The achievement of the purpose, functional characteristics and advantages of the present disclosure will be further described with reference to the accompanying drawings in conjunction with embodiments.

### DETAILED DESCRIPTION OF THE EMBODIMENTS

The technical solutions of the embodiments of the present disclosure will be described in more detail below with reference to the accompanying drawings. It is obvious that the embodiments to be described are only some rather than all of the embodiments of the present disclosure. All other embodiments obtained by those skilled in the art based on the embodiments of the present disclosure without creative efforts shall fall within the scope of the present disclosure.

It should be noted that if there are directional indications (such as up, down, left, right, front, back, etc) involved in the embodiments of the present disclosure, the directional indications are only used to explain a certain posture as shown in the accompanying drawings. If the specific posture changes, the directional indication also changes accordingly.

In addition, the terms "first", "second", etc. in the embodiments of the present disclosure are only for the purpose of description, and should not be construed as indicating or implying relative importance or implicitly indicates the number of technical features indicated. Thus, a feature delimited with "first", "second" may expressly or implicitly include at least one of that feature. In addition, the technical solutions of the various embodiments can be combined with each other, but must be based on the realization by those skilled in the art. When the combination of technical solutions is contradictory or cannot be realized, the combination of such technical solutions should be considered to not exist or fall within the scope of the present disclosure.

The pizza is a kind of traditional western food and favorable all over world due to globalization.

With the development of diversity in social life, special cooking equipment for various foods are developing towards the miniaturization and portability, such as pizza ovens. Small shops, fast food restaurants on the street, and individuals all want to make their own pizzas, which will be possible with the improvement of pizza ovens. Thus, pizzas are no longer only made by pizzerias with fixed ovens.

In the present market, especially in the European and American markets, the baking tray and heating assembly are integrated in the oven body of the present pizza baking equipment, which requires the external gas to bake the pizza, the volume of the pizza baking equipment is reduced to occupy a smaller space for shop operators to bake pizza, and to also allow individuals to have a portable pizza baking machine at home or on a picnic. Among these pizza baking equipment, there is a type of pizza oven which controls the rotation of the baking tray by a handle to heat the pizza evenly. Although this kind of pizza oven is smaller than traditional pizza ovens, its' handle transmission mechanism is easy to fail during operation.

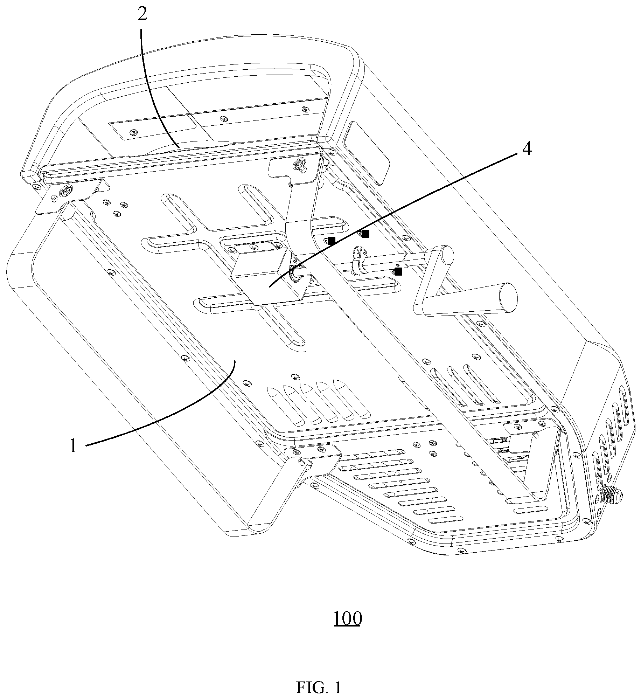

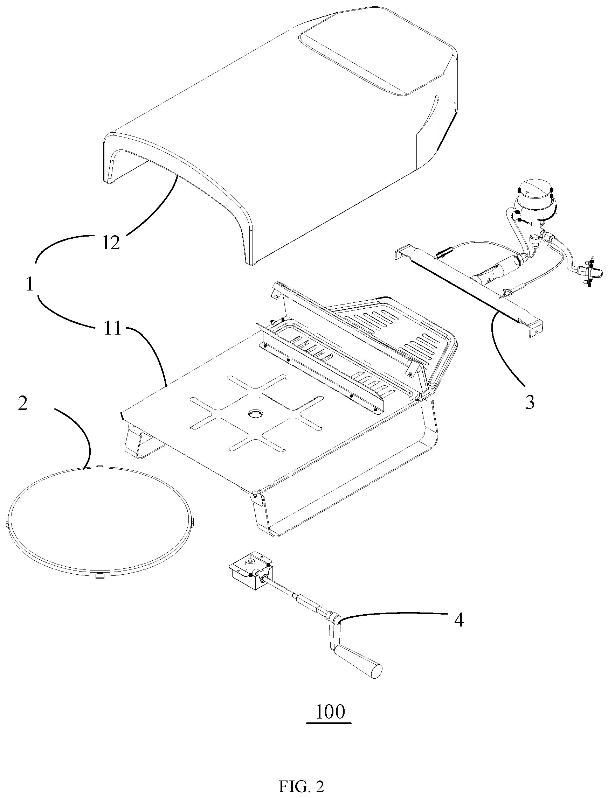

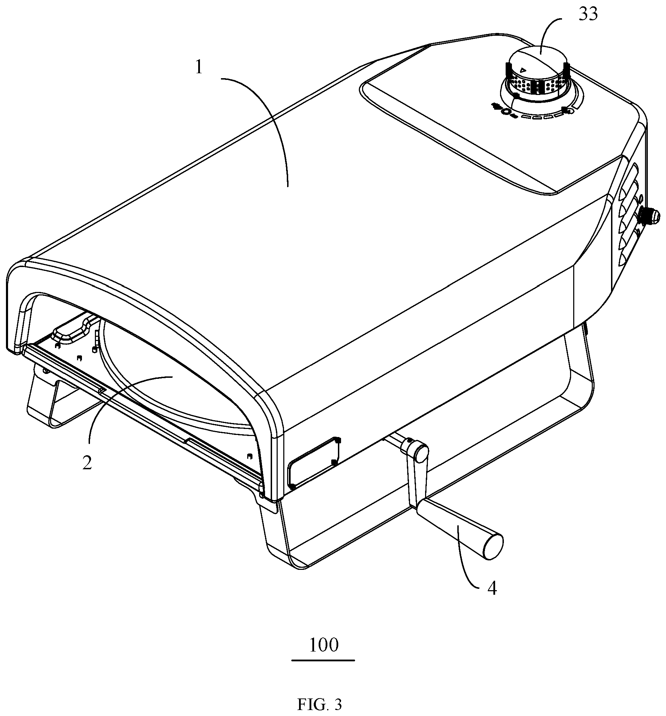

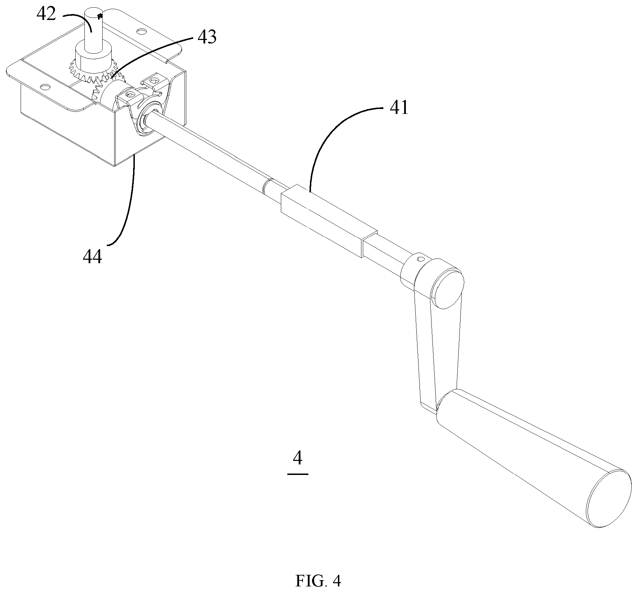

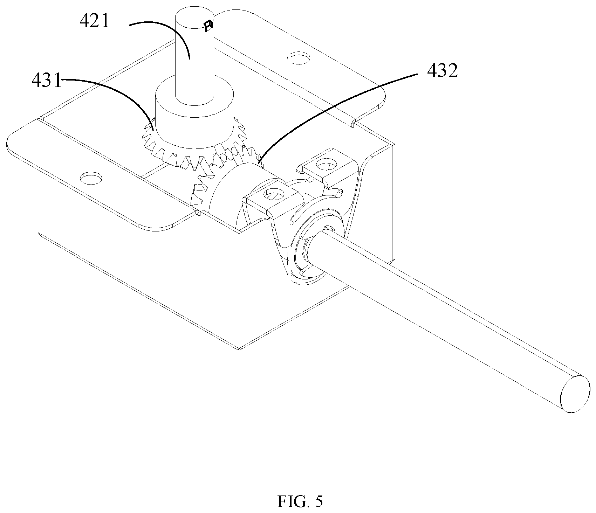

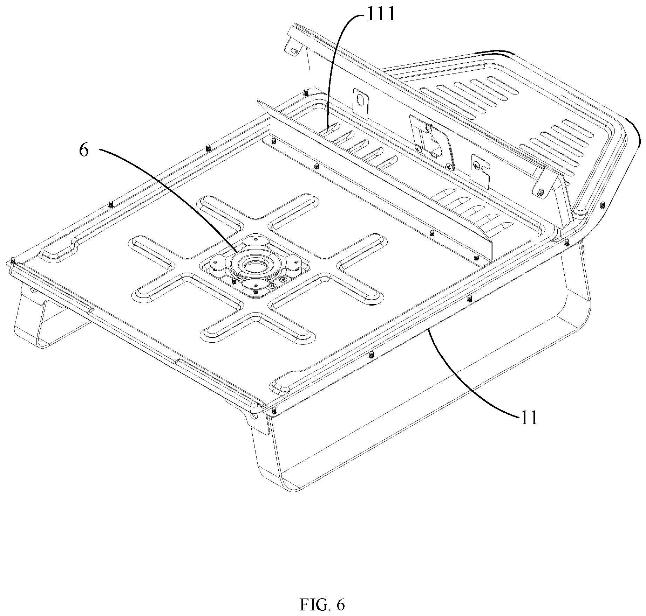

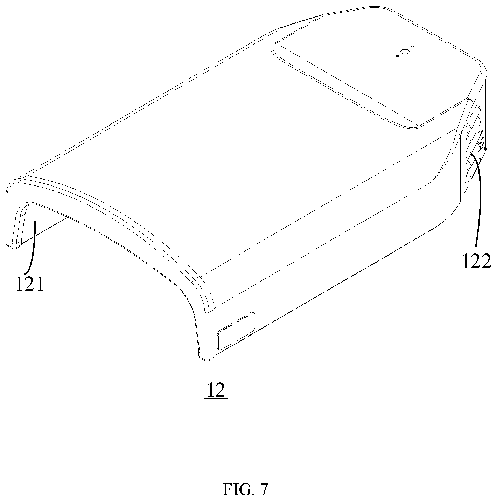

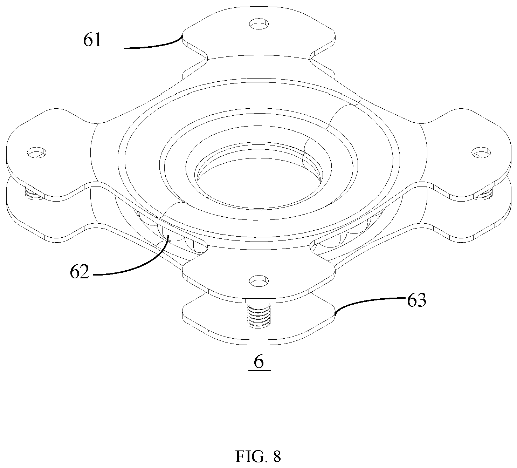

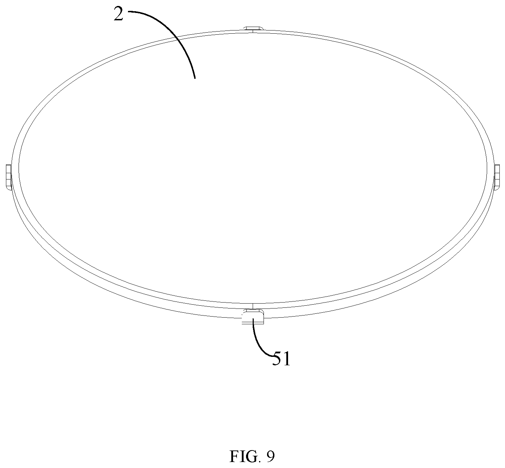

In order to solve the above problem, the present disclosure provides a hand-cranked pizza oven with low failure rate and easy maintenance. FIG. 1 to FIG. 9 are schematic structural views of the hand-cranked pizza oven according to an embodiment of the present disclosure.

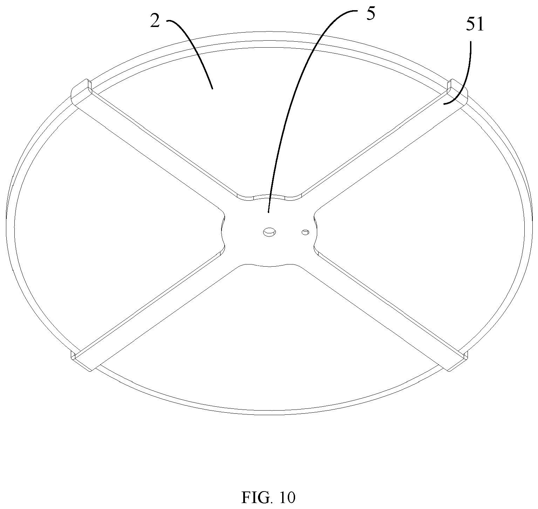

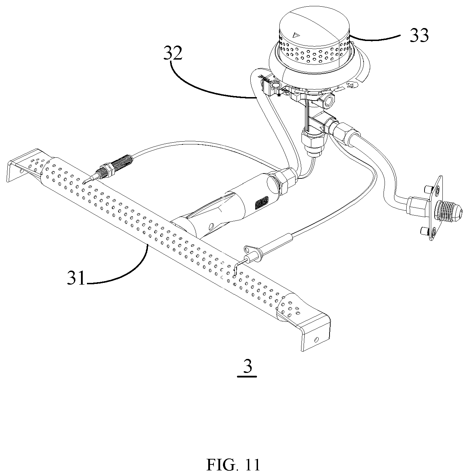

Referring to FIG. 1 to FIG. 11, the present disclosure provides a hand-cranked pizza oven 100, including an oven body 1, a baking tray 2, a burner assembly 3 and a hand-cranked driving structure 4. The oven body 1 is provided with a cooking chamber. The baking tray 2 is provided in the cooking chamber along an axis extending in an up-down direction. The burner assembly 3 includes a burning portion 31 which can extend into the cooking chamber, and the burning portion 31 is used for baking ingredients on the baking tray 2. The hand-cranked driving structure 4 includes a rocker 41 that can rotate around an axis extending in a horizontal direction, a driving portion 42 rotatably provided along the axis extending in the up-down direction, and a transmission structure 43 provided between the rocker 41 and the driving portion 42. At least part of the driving portion 42 can extend into the cooking chamber to connect to and drive the baking tray 2.

According to the technical solution of the present disclosure, the driving portion 42 is extended into the cooking chamber and is connected to the baking tray 2 for driving, and plays a role as the rotating shaft of the baking tray 2, supporting the baking tray 2, and driving the baking tray 2 to rotate. Compared with a design in the prior art where the rotating shaft of the baking tray 2 and the driving device are provided at different positions at intervals, the hand-cranked pizza oven 100 provided in the present disclosure integrates the rotating shaft of the baking tray and the driving device together, which reduces the overall volume of the hand-cranked pizza oven 100, the number of elements supporting the baking tray 2, and the number and volume of elements for transmitting torque, and the reduction in the number of components reduces the number of the transmission relationships, that means the connection points that are possible to fail are reduced, to reduce the failure rate of the hand-cranked pizza oven 100.

The transmission structure 43 can be a crank-slider mechanism, a belt, or a gear, which is not limited in the present disclosure. In an embodiment of the present disclosure, the rocker 41 is provided with a rocker shaft extending in the horizontal direction. The transmission structure 43 includes a second bevel gear 432 provided on the rocker shaft and a first bevel gear 431 meshed with the second bevel gear 432 and rotatably provided in the up-down direction. A connection shaft 421 is provided at a middle of the first bevel gear 431, and the driving portion 42 includes the connection shaft 421. Only the first bevel gear 431 and the second bevel gear 432 are used, which reduces a number of elements of the transmission structures 43, simplifies a configuration of the transmission structure 43, reduces the number of internal connection points of the transmission structure 43 to be one, and reduces a possibility of a misalignment of components in the transmission structure 43, to reduce a failure rate. The first bevel gear 431 and the second bevel gear 432 can be a straight bevel gear, a helical bevel gear, or a zero-degree bevel gear, which is not limited in the present disclosure. Of course, in other embodiments of the present disclosure, the first bevel gear 431 may not be provided along the axis extending in the up-down direction. For example, an angle between the axial direction of the first bevel gear 431 and the axis extending in the up-down direction is set to A, A is equal to 10°. A third gear is placed horizontally at a bottom of the baking tray 2 to transmit a torque of an inclined first bevel gear 431 to a horizontal plane of the baking tray 2, which is not limited in the present disclosure. An end of the connection shaft 421 can be integrally provided with the first bevel gear 431 and another end of the connection shaft 421 is connected to the connection frame 5 for stopping rotation, or an end of the connection shaft 421 can be integrally provided with the connection frame 5 and another end of the connection shaft 421 is connected to the first bevel gear 431 for stopping rotation, which is not limited in the present disclosure. The connection frame 5 is described below.

A docking structure can be directly formed at a bottom of a body of the baking tray 2 to be connected to the connection shaft 421 for stopping rotation, or a bracket structure can be provided between the body of the baking tray 2 and the connection shaft 421, which is not limited in the present disclosure. In an embodiment of the present disclosure, the hand-cranked pizza oven 100 also includes a connection frame 5 provided in the cooking chamber, a middle part of the connection frame 5 is connected between the connection shaft 421 and the baking tray 2, a middle part of the connection frame 5 is provided with a connection hole, a plurality of clamping arms 51 extend toward a periphery of the connection frame 5, a part of the connection shaft 421 extending into the cooking chamber is provided in the connection hole and is connected to the connection frame 5 for stopping rotation, and the baking tray 2 is provided in the plurality of the clamping arms 51. The connection shaft 421 is connected to the connection frame 5 for stopping rotation, so that the connection shaft 421 transmits a torque to the connection frame 5, and the plurality of clamping arms 51 support the baking tray 2 in multiple directions, thus a load-bearing strength of the baking tray 2 is improved, and a rotation of the baking tray 2 is more stable due the support by each clamping arm 51. The baking tray 2 is provided in the plurality of clamping arms 51, so that each clamping arm 51 limits a horizontal movement of the baking tray 2 in every radial direction, and stabilizes a relative position of the connection frame 5 and the baking tray in the space. In order to realize that the baking tray 2 provided in the clamping arm 51 can cut an upper surface of any one of the clamping arms 51 except for cutting the upper surface of an end portion of the clamping arm 51, the end of the clamping arm 51 can be provided with a blocking plate upwards, which is not limited in the present disclosure. A number of the clamping arms 51 can be four or five, which is not limited in the present disclosure. The driving portion 42 may only include the connection shaft 421 provided with a rotation-stopping groove, or a fixing member may be connected under the connection hole to connect to the connecting shaft 421 for stopping rotation, or a magnetic member can be provided at the connection shaft 421 or the connection hole, which is not limited in the present disclosure.

In order to reduce a friction to the baking tray 2 generated by the oven body 1 when the baking tray 2 rotates, in an embodiment, a plane bearing 6 provided in the cooking chamber is also included, and the plane bearing 6 includes a upper connector 61, a lower connector 63 along the up-down direction, and a plurality of rolling elements 62 provided between the upper connector 61 and the lower connector 63. The upper connector 61 can be rotatably provided along the axis extending in the up-down direction relative to the lower connector 63, the upper connector 61 is upwardly connected to the clamping arm 51, the baking tray 2 is held above the clamping arm 51, and the lower connector 63 is downwardly connected to the bottom wall of the cooking chamber. A static friction and a sliding friction between the clamping arm 51 and/or the baking tray 2 and the bottom wall of the oven body 1 are replaced by a sliding friction generated between the upper connector 61 and the rolling element 62, and between the lower connector 63 and the rolling element 62, which greatly reduces a rotation resistance of the baking tray 2. The rolling element 62, in a shape of a disk, can roll along a circumferential direction of the plane bearing 6, and the rolling element 62 can also be in the shape of a ball. The upper connector 61 and/or the lower connector 63 can extend on a horizontal plane, or form a curl toward the rolling element 62 in the up-down direction, which is not limited in the present disclosure.

In order to protect the first bevel gear 431 and the second bevel gear 432, in an embodiment of the present disclosure, a protective shell 44 is detachably provided on the lower end of the oven body 1, at least the first bevel gear 431 and the second bevel gear 432 are provided in the protective shell 44. Only the first bevel gear 431 and the second bevel gear 432 are in the protective shell 44, or a part of the connection shaft 421 may extend downwardly into the protective shell 44, and a part of the rocker 41 extends into the protective shell 44, which is not limited in the present disclosure. The protective shell 44 is used to protect internal components from a collision damage, a water and oil pollution, and a chemical corrosion, etc., for prolonging a service life of the first bevel gear 431 and the second bevel gear 432 and reducing a possibility of failure. The protective shell 44 can be detachably connected to the bottom wall of the oven body 1 by a screw thread connection or a buck, so that at least the protective shell 44, the first bevel gear 431, and the second bevel gear can be as a whole disassembled from the oven body 1 for replacement or maintenance.

In order to prevent an ingredient from being polluted by an outside when the pizza is baked, in an embodiment of the present disclosure, the oven body 1 includes a base 11 and an oven shell 12 covering the base 11, and the cooking chamber is defined between the base 11 and the oven shell 12. The base 11 is used to prevent pollutants from below from entering the cooking chamber, and the oven shell is used to prevent pollutants from above from entering the cooking chamber. In an embodiment of the present disclosure, the lower connector 63 of the plane bearing 6 is connected to the upper surface of the base 11, a first through hole is formed in the base 11, and the connection shaft 421 upwardly passes through the first through hole and the plane bearing 6 in sequence to be connected in the connection hole for stopping rotation. In an outer periphery of the connection shaft 421, the base 11, the plane bearing 6, the clamping arm 51 of the connection frame 5, and the baking tray 2 are sequentially connected from bottom to top. The protective shell 44 is detachably connected to the lower surface of the base 11, and the first bevel gears 431 are provided at intervals below the base 11.

The oven body 1 may be provided with several sub-shells hinged to each other, or an opening may be provided on the oven body 1, which is not limited in the present disclosure. In an embodiment of the present disclosure, the opening is provided at an end of the cooking chamber away from the burning portion 31, the baking tray 2 is adjacent to the opening, and the opening is formed between the base 11 and the oven shell 12. The opening is used to provide a passage for picking and placing the food and for exhausting the air.

In order to fully transfer a heat of a hot air in the cooking chamber to the ingredients, in an embodiment of the present disclosure, the burning portion 31 includes a burning pipe provided in the cooking chamber, a reflecting shell 121 is provided in the cooking chamber, the reflecting shell 121 is covered on the baking tray 2 and the burning pipe for reflecting, an upward deflector is provided between the burning pipe and the baking tray 2 to guide the heat flow of the burning pipe upward to the top of the reflecting shell 121, and/or, a downward deflector is provided on the top wall of the reflecting shell 121 to guide the heat downwardly to cover on the baking tray 2. A lower surface of the ingredients on the baking tray 2 receives heat through the baking tray 2, and an upper surface of the ingredient receives flowing hot air guided by the upper deflector and the lower deflector, the flowing hot air not only provides the heat, but also produces an airflow to remove a moisture from the top surface of the ingredients for speeding up cooking. Moreover, when the burning pipe is provided on a side of the baking tray 2, the burning pipe is separated from the baking tray 2 by the upper deflector to prevent the side of the ingredients from being overcooked by open fire directly burning the side of the ingredient. The burning pipe may be an open flame burner or an infrared burner, which is not limited in the present disclosure.

The burning portion 31 can be provided below the oven body 1, or on the side of the oven body 1, can use woods gas for heating, can use an open flame burner or an infrared burner, which is not limited in the present disclosure. In an embodiment of the present disclosure, the burner assembly 3 includes a burning pipe provided in the cooking chamber, the baking tray 2, the burning pipe, and the accommodation chamber are provided at intervals in sequence, the accommodation chamber is adjacent to the cooking chamber. The baking tray 2, the connection frame 5 and the burning pipes are held in the cooking chamber, the air supply pipe 32 is kept in the accommodation chamber, and a ventilation hole is formed on the sidewall of the oven body 1 of the accommodation chamber. The burner assembly 3 also includes an air supply pipe 32 and a regulation valve 33 provided on the air supply pipe 32 to regulate an amount of air supplied by the burning pipe, and at least part of the regulation valve 33 extends out from the top of the oven body 1 corresponding to the accommodation chamber. The ventilation hole 122 is used to cool down the air supply pipe 32 and the regulation valve 33 through the airflow, so as to prevent the service life from being affected by high temperature. In an embodiment of the present disclosure, a second through hole is formed on the oven shell 12 above the accommodation chamber, the regulation valve 33 is exposed outside the oven body 1, and a lower part of the regulation valve 33 is connected to the air supply pipe 32 through the second through hole.

The air supply pipe 32 may include a gas pipe for transporting the gas and an oxygen pipe for transporting the oxygen, and an air inlet 111 may also be provided around the burning pipe. In an embodiment of the present disclosure, the burning portion 31 includes a burning pipe provided in the cooking chamber, and the bottom wall of the cooking chamber is provided with the air inlet 111 corresponding to the burning pipe to provide the oxygen to the burning pipe.

The above descriptions are only embodiments of the present disclosure, and are not intended to limit the scope of the present disclosure.

## Claims

1. A hand-cranked pizza oven (100), **characterized by** comprising:
an oven body (1) provided with a cooking chamber;
a baking tray (2) rotatably provided in the cooking chamber along an axis extending in an up-down direction;
a burner assembly (3) comprising a burning portion (31) extendable into the cooking chamber for roasting ingredients on the baking tray (2); and
a hand-cranked driving structure (4) comprising a rocker (41) rotatable around an axis **characterized in that** said axis is
extending in a horizontal direction, and **in that** it further comprises
a driving portion (42) rotatably provided along the axis extending in the up-down direction, and a transmission structure (43) provided between the rocker (41) and the driving portion (42), wherein at least part of the driving portion (42) is configured to be extendable into the cooking chamber to connect to and drive the baking tray (2).

2. The hand-cranked pizza oven (100) according to claim 1, wherein the rocker (41) is provided with a rocker shaft extending in the horizontal direction;
the transmission structure (43) comprises a second bevel gear (432) provided on the rocker shaft and a first bevel gear (431) meshed with the second bevel gear (432);
a connection shaft (421) is provided at a middle position of the first bevel gear (431); and
the driving portion (42) comprises the connection shaft (421).

3. The hand-cranked pizza oven (100) according to claim 2, further comprising a connection frame (5) provided in the cooking chamber, wherein a connection hole is provided in a middle of the connection frame (5), and the connection frame (5) comprises a plurality of clamping arms (51) extending towards a periphery thereof;
a part of the connection shaft (421) extending into the cooking chamber is provided in the connection hole and is connected to the connection frame (5) for stopping rotation; and
the baking tray (2) is provided in the plurality of the clamping arms (51).

4. The hand-cranked pizza oven (100) according to claim 3, further comprising a plane bearing (6) provided in the cooking chamber, wherein the plane bearing (6) comprises an upper connector (61) and a lower connector (63) distributed in the up-down direction respectively, and a plurality of rolling elements (62) provided between the upper connector (61) and the lower connector (63);
the upper connector (61) is rotatably provided relative to the lower connector (63) along the axis extending in the up-down direction; and
the upper connector (61) is upwardly connected to the connection frame (5), and the lower connector (63) is downwardly connected to a bottom wall of the cooking chamber.

5. The hand-cranked pizza oven (100) according to claim 2, wherein a protective shell (44) is detachably provided at a lower end of the oven body (1); and
the first bevel gear (431) and the second bevel gear (432) are provided in the protective shell (44).

6. The hand-cranked pizza oven (100) according to claim 1, wherein the oven body (1) comprises a base (11) and an oven shell (12) covering the base (11), and the cooking chamber is defined between the base (11) and the oven shell (12).

7. The hand-cranked pizza oven (100) according to claim 1, wherein an opening is provided at an end of the cooking chamber away from the burning portion (31), and the baking tray (2) is provided adjacent to the opening.

8. The hand-cranked pizza oven (100) according to claim 7, wherein the burning portion (31) comprises a burning pipe provided in the cooking chamber; and
a reflecting shell (121) is provided in the cooking chamber, the reflecting shell (121) is covered on the baking tray (2) and the burning pipe for reflection, an upward deflector is provided between the burning pipe and the baking tray (2) to guide a heat flow of the burning pipe upward to a top of the reflecting shell (121); and/or,
a downward deflector is provided on a top wall of the reflecting shell (121) to guide the heat flow downward to cover on the baking tray (2).

9. The hand-cranked pizza oven (100) according to claim 1, wherein the burning portion (31) comprises a burning pipe, an accommodation chamber is defined in the oven body (1), the accommodation chamber is adjacent to the cooking chamber;
the baking tray (2), the burning pipe, and the accommodation chamber are provided sequentially at intervals;
a ventilation hole (122) is formed on a sidewall of the oven body (1) of the accommodation chamber; and
the burner assembly (3) further comprises an air supply pipe (32) and a regulation valve (33) provided on the air supply pipe (32) for adjustment of an amount of air supplied by the burning pipe, the air supply pipe (32) is provided in the accommodation chamber, and the regulation valve (33) is extended out from the top of the oven body (1) corresponding to the accommodation chamber.

10. The hand-cranked pizza oven (100) according to claim 1, wherein the burning portion (31) comprises a burning pipe provided in the cooking chamber; and
a bottom wall of the cooking chamber is provided with an air inlet (111) corresponding to the burning pipe.

## Patentansprüche

1. Handkurbelbetätigter Pizzaofen (100), **dadurch gekennzeichnet, dass** er umfasst:
einen Ofenkörper (1), der mit einem Garraum versehen ist;
ein Backblech (2), das drehbar in dem Garraum entlang einer sich in einer Auf-Ab-Richtung erstreckenden Achse angeordnet ist;
eine Brenneranordnung (3), die einen Brennabschnitt (31) umfasst, der sich in den Garraum hinein erstrecken kann, um Zutaten auf dem Backblech (2) zu rösten; und
eine handkurbelbetätigte Antriebsstruktur (4), die einen um eine Achse drehbaren Schwenkhebel (41) umfasst, **dadurch gekennzeichnet, dass** sich die Achse in horizontaler Richtung erstreckt, und dass sie ferner einen entlang der sich in Auf-Ab-Richtung erstreckenden Achse drehbar angeordneten Antriebsabschnitt (42) und eine zwischen dem Schwenkhebel (41) und dem Antriebsabschnitt (42) angeordnete Übertragungsstruktur (43) umfasst, wobei zumindest ein Teil des Antriebsabschnitts (42) so konfiguriert ist, dass er in den Garraum hinein erstreckt, um sich mit dem Backblech (2) zu verbinden und dieses anzutreiben.

2. Handkurbelbetätigter Pizzaofen (100) gemäß Anspruch 1, wobei der Schwenkhebel (41) mit einer sich in horizontaler Richtung erstreckenden Schwenkhebelwelle versehen ist;
die Übertragungsstruktur (43) ein zweites Kegelrad (432), das an der Schwenkhebelwelle angebracht ist, und ein erstes Kegelrad (431), das mit dem zweiten Kegelrad (432) im Eingriff steht, umfasst;
eine Verbindungswelle (421) an einer mittleren Position des ersten Kegelrads (431) vorgesehen ist; und
der Antriebsabschnitt (42) die Verbindungswelle (421) umfasst.

3. Handkurbelbetätigter Pizzaofen (100) gemäß Anspruch 2, ferner umfassend einen im Garraum angeordneten Verbindungsrahmen (5), wobei in einer Mitte des Verbindungsrahmens (5) ein Verbindungsloch vorgesehen ist und der Verbindungsrahmen (5) mehrere zu seiner Peripherie hin erstreckene Klemmarme (51) umfasst;
wobei ein in den Garraum hinein erstreckter Teil der Verbindungswelle (421) in dem Verbindungsloch angeordnet ist und mit dem Verbindungsrahmen (5) drehfest verbunden ist; und
das Backblech (2) in der Vielzahl der Klemmarme (51) vorgesehen ist.

4. Handkurbelbetätigter Pizzaofen (100) gemäß Anspruch 3, ferner umfassend ein Flächenlager (6), das im Garraum vorgesehen ist, wobei das Flächenlager (6) einen oberen Verbinder (61) und einen unteren Verbinder (63) umfasst, die jeweils in der Auf-Ab-Richtung verteilt sind, und mehrere Rollenelemente (62), die zwischen dem oberen Verbinder (61) und dem unteren Verbinder (63) vorgesehen sind;
der obere Verbinder (61) drehbar relativ zum unteren Verbinder (63) entlang der sich in Auf-Ab-Richtung erstreckenden Achse angeordnet ist; und
Der obere Verbinder (61) nach oben mit dem Verbindungsrahmen (5) verbunden ist, und der untere Verbinder (63) nach unten mit einer Bodenwand des Garraums verbunden ist.

5. Handkurbelbetätigter Pizzaofen (100) gemäß Anspruch 2, wobei eine Schutzschale (44) lösbar an einem unteren Ende des Ofenkörpers (1) vorgesehen ist; und
das erste Kegelrad (431) und das zweite Kegelrad (432) in der Schutzschale (44) vorgesehen sind.

6. Handkurbelbetätigter Pizzabackofen (100) gemäß Anspruch 1, wobei der Ofenkörper (1) eine Basis (11) und eine Ofenschale (12), die die Basis (11) bedeckt, umfasst und der Garraum zwischen der Basis (11) und der Ofenschale (12) definiert ist.

7. Handkurbelbetätigter Pizzabackofen (100) gemäß Anspruch 1, wobei eine Öffnung an einem von dem Brennabschnitt (31) abgewandten Ende des Garraums vorgesehen ist und das Backblech (2) benachbart zu der Öffnung angeordnet ist.

8. Handkurbelbetätigter Pizzaofen (100) gemäß Anspruch 7, wobei der Brennabschnitt (31) ein im Garraum bereitgestelltes Brennrohr umfasst; und
eine Reflexionsschale (121) in dem Garraum vorgesehen ist, die Reflexionshaube (121) das Backblech (2) und das Brennrohr zur Reflexion überdeckt, zwischen dem Brennrohr und dem Backblech (2) ein nach oben gerichteter Ablenker angeordnet ist, um einen Wärmestrom des Brennrohrs nach oben zu einer Oberseite der Reflexionsschale (121) zu führen; und/oder,
ein nach unten gerichteter Ablenker an einer oberen Wand der Reflexionsschale (121) angebracht ist, um den Wärmestrom nach unten zu führen und das Backblech (2) abzudecken.

9. Handkurbelbetätigter Pizzaofen (100) gemäß Anspruch 1, wobei der Brennabschnitt (31) ein Brennrohr umfasst, eine Aufnahmekammer im Ofenkörper (1) ausgebildet ist und die Aufnahmekammer an den Garraum angrenzt;
das Backblech (2), das Brennrohr und die Aufnahmekammer in Abständen nacheinander angeordnet sind;
eine Belüftungsöffnung (122) an einer Seitenwand des Ofenkörpers (1) der Aufnahmekammer ausgebildet ist; und
die Brenneranordnung (3) weiterhin eine Luftzufuhrleitung (32) und ein Regelventil (33) umfasst, das an der Luftzufuhrleitung (32) zur Einstellung der vom Brennrohr zugeführten Luftmenge angebracht ist, wobei die Luftzufuhrleitung (32) in der Aufnahmekammer angeordnet ist und das Regelventil (33) aus einer der Aufnahmekammer entsprechenden Oberseite des Ofenkörpers (1) herausragt.

10. Handkurbelbetätigter Pizzaofen (100) gemäß Anspruch 1, wobei der Brennabschnitt (31) ein im Garraum angeordnetes Brennrohr umfasst; und
eine Bodenwand des Garraums mit einem Lufteinlass (111) versehen ist, der dem Brennrohr entspricht.

## Revendications

1. Four à pizza à manivelle manuelle (100), **caractérisé en ce qu'**il comprend :
un corps de four (1) pourvu d'une chambre de cuisson ;
une plaque de cuisson (2) prévue de manière rotative dans la chambre de cuisson selon un axe s'étendant dans une direction verticale ;
un ensemble de brûleur (3) comprenant une partie de combustion (31) extensible jusqu'à l'intérieur de la chambre de cuisson pour rôtir des ingrédients sur la plaque de cuisson (2) ; et
une structure d'entraînement à manivelle manuelle (4) comprenant un basculeur (41) rotatif autour d'un axe, **caractérisée en ce que** l'axe s'étend dans une direction horizontale, et ce qu'elle comprend en outre :
une partie d'entraînement (42) disposée de manière rotative selon l'axe s'étendant dans la direction verticale, et une structure de transmission (43) prévue entre le basculeur (41) et la partie d'entraînement (42), dans laquelle au moins une partie de la partie d'entraînement (42) est configurée pour être extensible jusqu'à l'intérieur de la chambre de cuisson afin de se relier à et d'entraîner la plaque de cuisson (2) à tourner.

2. Four à pizza à manivelle manuelle (100) selon la revendication 1, dans lequel le basculeur (41) est pourvu d'un arbre de basculeur s'étendant dans la direction horizontale ;
la structure de transmission (43) comprend un second engrenage conique (432) prévu sur l'arbre de basculeur et un premier engrenage conique (431) engrené avec le second engrenage conique (432) ;
un arbre de liaison (421) est prévu à une position médiane du premier engrenage conique (431) ; et
la partie d'entraînement (42) comprend l'arbre de liaison (421).

3. Four à pizza à manivelle manuelle (100) selon la revendication 2, comprenant en outre un cadre de liaison (5) prévu dans la chambre de cuisson, dans lequel un trou de liaison est prévu au milieu du cadre de liaison (5), et le cadre de liaison (5) comprend une pluralité de bras de serrage (51) s'étendant vers une périphérie de celui-ci ;
une partie de l'arbre de liaison (421) s'étendant jusqu'à l'intérieur de la chambre de cuisson est prévue dans le trou de liaison et est reliée au cadre de liaison (5) pour empêcher une rotation ; et
la plaque de cuisson (2) est prévue dans la pluralité de bras de serrage (51).

4. Four à pizza à manivelle manuelle (100) selon la revendication 3, comprenant en outre un palier plan (6) prévu dans la chambre de cuisson, dans lequel le palier plan (6) comprend un connecteur supérieur (61) et un connecteur inférieur (63) répartis respectivement dans la direction verticale, et une pluralité d'éléments roulants (62) prévus entre le connecteur supérieur (61) et le connecteur inférieur (63) ;
le connecteur supérieur (61) est prévu de manière rotative par rapport au connecteur inférieur (63) le long de l'axe s'étendant dans la direction verticale ; et
le connecteur supérieur (61) est relié vers le haut au cadre de liaison (5), et le connecteur inférieur (63) est relié vers le bas à une paroi inférieure de la chambre de cuisson.

5. Four à pizza à manivelle manuelle (100) selon la revendication 2, dans lequel une coque protectrice (44) est prévue de manière amovible à une extrémité inférieure du corps de four (1) ; et
le premier engrenage conique (431) et le second engrenage conique (432) sont disposés dans la coque protectrice (44).

6. Four à pizza à manivelle manuelle (100) selon la revendication 1, dans lequel le corps de four (1) comprend une base (11) et une coque de four (12) recouvrant la base (11), et la chambre de cuisson est définie entre la base (11) et la coque de four (12).

7. Four à pizza à manivelle manuelle (100) selon la revendication 1, dans lequel une ouverture est prévue à une extrémité de la chambre de cuisson éloignée de la partie de combustion (31), et la plaque de cuisson (2) est disposée en adjacence avec l'ouverture.

8. Four à pizza à manivelle manuelle (100) selon la revendication 7, dans lequel la partie de combustion (31) comprend un tuyau de combustion prévu dans la chambre de cuisson ; et
une coque réfléchissante (121) est prévue dans la chambre de cuisson, la coque réfléchissante (121) recouvrant la plaque de cuisson (2) et le tuyau de combustion pour une réflexion, un déflecteur vers le haut est prévu entre le tuyau de combustion et la plaque de cuisson (2) pour guider un flux de chaleur à partir du tuyau de combustion vers le haut jusqu'à un sommet de la coque réfléchissante (121) ; et/ou,
un déflecteur vers le bas est prévu sur une paroi supérieure de la coque réfléchissante (121) pour guider le flux de chaleur vers le bas afin de recouvrir la plaque de cuisson (2).

9. Four à pizza à manivelle manuelle (100) selon la revendication 1, dans lequel la partie de combustion (31) comprend un tuyau de combustion, une chambre d'accueil est définie dans le corps de four (1), la chambre d'accueil est adjacente à la chambre de cuisson ;
la plaque de cuisson (2), le tuyau de combustion et la chambre d'accueil sont disposés en séquence à intervalles ;
un trou de ventilation (122) est formé sur une paroi latérale du corps de four (1) de la chambre d'accueil ; et
l'ensemble de brûleur (3) comprend en outre un tuyau d'alimentation en air (32) et une vanne de régulation (33) prévue sur le tuyau d'alimentation en air (32) pour une régulation d'une quantité d'air alimentée par le tuyau de combustion, le tuyau d'alimentation en air (32) est prévu dans la chambre d'accueil, et la vanne de régulation (33) s'étend ver l'extérieur à partir du somment du corps de four (1) correspondant à la chambre d'accueil.

10. Four à pizza à manivelle manuelle (100) selon la revendication 1, dans lequel la partie de combustion (31) comprend un tuyau de combustion prévu dans la chambre de cuisson ; et
une paroi inférieure de la chambre de cuisson est pourvue d'une entrée d'air (111) correspondant au tuyau de combustion.
